# Europäisches Patentamt

(19) **European Patent Office**

**Office européen des brevets**

(11) Veröffentlichungsnummer: **0 070 502**
**B1**

(12) **EUROPÄISCHE PATENTSCHRIFT**

(45) Veröffentlichungstag der Patentschrift:
05.02.86

(51) Int. Cl.⁴: **H 04 Q 11/04,** H 04 Q 3/54

(21) Anmeldenummer: **82106265.0**

(22) Anmeldetag: **13.07.82**

(54) Schaltungsanordnung für zentralgesteuerte Fernmeldevermittlungsanlagen, insbesondere für Zeitmultiplex-Fernsprechvermittlungsanlagen, mit Informationsaustausch zwischen teilzentralen Einrichtungen.

(30) Priorität: **17.07.81 DE 3128365**

(43) Veröffentlichungstag der Anmeldung:
**26.01.83 Patentblatt 83/4**

(45) Bekanntmachung des Hinweises auf die Patenterteilung:
**05.02.86 Patentblatt 86/6**

(84) Benannte Vertragsstaaten:
**AT CH FR GB IT LI NL SE**

(56) Entgegenhaltungen:
**DE - B - 2 906 717**
**GB - A - 2 067 050**

**TELCOM REPORT, Band 2, Nr.3, 1979, München (DE), H. SUCKFÜLL: "Architektur einer neuen Linie digitaler öffentlicher Fernsprechvermittlungen", Seiten 174-183**

(73) Patentinhaber: **Siemens Aktiengesellschaft, Berlin und München Wittelsbacherplatz 2, D-8000 München 2 (DE)**

(72) Erfinder: **Schneider, Alfred, Josef-Haydn-Strasse 3, D-8013 Haar (DE)**

**Beschreibung**

In zentralgesteuerten Fernmeldevermittlungsanlagen wird bevorzugt das Prinzip der Aufteilung von Steuerungsfunktionen auf teilzentrale Teilsteuereinrichtungen ängewendet, wie es z.B. der DE28 16 286 und dem darin genannten Stand der Technik zu entnehmen ist. Hierbei spielt die Übertragung von Informationen zwischen einem Zentralsteuerwerk und jeder der Teilsteuereinrichtungen - jeweils in der einen und der anderen Richtung - sowie zwischen je zweien der Teilsteuereinrichtungen eine bedeutende Kolle. Die obige Druckschrift sieht hierfür einen gemeinsamen Datenbus vor.

Die DE-PS 11 90 517 sieht eine zentrale Weitergabesteuereinrichtung mit zentralem Speicher vor, die sämtliche zwischen den teilzentralen Steuereinrichtungen auszutauschende Informationen einzeln immer erst von einer dieser Steuereinrichtungen aufnimmt, dann zwischenspeichert und anschließend an die jeweils betreffende andere Steuereinrichtung weitergibt. In hiermit technisch verwandter Weise sieht die DE-PS 28 13 721 eine Mehrzahl von demselben Zweck dienenden Zwischenspeichern vor, von denen ein jeder Informationen von peripheren Steuereinrichtungen aufnehmen und zu jeweils einem Teilsteuerwerk weiterleiten kann. Hierzu dienen zentrale Busleitungen, die zur Informationsübertragung fallweise in Anspruch genommen werden.

Die DE-PS 23 27 669 sieht zur Informationsübertragung zwischen einem Zentralsteuerwerk und Teilsteuereinrichtungen (in beiden Richungen) sowie zwischen jeweils zwei Teilsteuereinrichtungen einen gemeinsamen Datenbus vor. Dieser kann vom Zentralsteuerwerk für Informationsübertragungen von und zu ihm selbst belegt werden. Ferner ist aber auch noch ein zentraler Zuteiler vorgesehen, der den Datenbus für Informationsübertragungen jeweils zwischen zwei Teilsteuereinrichtungen belegen kann.

Durch die DE-PS 20 55 745 ist ferner eine Schaltungsanordnung bekannt geworden, in der als Pufferspeicher bezeichnete teilzentrale Einrichtungen über diesen individuelle Informationsübertragungswege, also einzeln mit dem Zentralsteuerwerk verbunden sind. Das Zentralsteuerwerk weist einen EingabeAusgabe-Speicher auf, der aus zwei Listen-Speichern besteht, von denen einer zur Eingabe von Informationen von den teilzentralen Einrichtungen in das Zentralsteuerwerk und der andere zur Ausgabe von Informationen vom Zentralsteuerwerk an die teilzentralen Einrichtungen dient. Die in diesem bekannten Falle pro teilzentrale Einrichtung vorgesehenen individuellen Informationsübertragungswege können - sofern es sich hierbei (wie im zuletzt angegebenen bekannten Falle) um individuelle Leitungen handelt - den Vorteil günstigerer Übertragungsbedingungen wegen der Möglichkeit optimaler Leitungsanpassung an den beiden Enden jeder dieser Leitungen haben, bei denen übertragungstechnisch nachteiligere Verzweigungen, Kettenschaltungen und dergleichen entfallen. Soweit es sich bei den genannten individuellen Informationsübertragungswegen um Zeitmultiplexkanäle handelt, hat die individuelle Verbindung jedes der Pufferspeicher mit dem Zentralsteuerwerk den Vorteil der besseren Übersichtlichkeit, insbesondere bei einer größeren Anzahl von Pufferspeichern, im Hinblick auf die Durchführung der Informationsübertragungsvorgänge für Daten, die jeweils von einem der Pufferspeicher kommend für einen anderen der Pufferspeicher bestimmt sind. Allerdings ist in dem bekannten Falle dadurch bedingt, daß diese Daten im Zentralsteuerwerkspeicher zwischengespeichert werden müssen.

Die Erfindung, die von einer Schaltungsanordnung der zuletzt erwähnten bekannten Art ausgeht, betrifft also eine Schaltungsanordnung für Fernmeldevermittlungsanlagen, insbesondere Zeitmultiplex-Fernsprechvermittlungsanlagen, mit jeweils einem Zentralsteuerwerk und mit teilzentralen Einrichtungen, die Informationen einerseits zum Zentralsteuerwerk geben sowie von ihm empfangen, und die mit dem Zentralsteuerwerk über ihnen individuelle Leitungen oder ihnen individuelle Kanäle einer Zeitmultiplexleitung verbunden sind, und in denen für den Informationsaustausch des Zentralsteuerwerks mit den teilzentralen Einrichtungen sowie für den Informationsaustausch zwischen den teilzentralen Einrichtungen ein Eingabe-/Ausgabe-Speicher vorgesehen ist, der außer einem Eingabeteil für durch das Zentralsteuerwerk abzurufende und von ihm zu verarbeitende Informationen einen in Ausgabeteilspeicher unterteilten Ausgabeteil enthält, und der zur Zwischenspeicherung für vom Zentralsteuerwerk erarbeitete und zu den teilzentralen Einrichtungen zu verteilende Informationen, sowie für von einer der teilzentralen Einrichtungen abzugebende und jeweils für eine andere teilzentrale Einrichtung bestimmte Informationen dient, die von der ersteren jeweils mit der Adresse dieser anderen teilzentralen Einrichtung oder einer ihr zugeordneten Einrichtung zu einer Eingabe-Ausgabe-Steuereinrichtung des Eingabe-Ausgabe-Speichers übertragen werden.

Eine Schaltungsanordnung dieser Art ist bereits durch die GB-A-2 067 050 bekannt. Auch in einer Schaltungsanordnung dieser bekannten Art besteht das Problem der Zentralsteuerwerksbelastung durch Informationen, die von einer teilzentralen Einrichtung zu einer anderen teilzentralen Einrichtung zu übertragen sind, weil hierfür ein gemeinsamer Datenbus nicht zur Verfügung steht.

Für die Erfindung besteht deshalb die Aufgabe, in einer Schaltungsanordnung der zuvor angegebenen Art - also unter der Voraussetzung, daß eine Direktübertragung von Informationen jeweils von einer teilzentralen Einrichtung zu einer anderen teilzentralen Einrichtung über einen gemeinsamen Oatenbus nicht vorgesehen ist - das Zentralsteuerwerk im Hinblick auf die Beförderung dieser Informationen zu entlasten.

Diese Aufgabe wird erfindungsgemäß dadurch gelöst, daß die Ausgabeteilspeicher den teilzentralen Einrichtungen zugeordnet sind, und daß von einer der teilzentralen Einrichtungen abzugebende und unverändert jeweils für eine andere teilzentrale Einrichtung bestimmte und einer Signalisierung von verbindungsindividuellen, in der ersteren eingetroffenen und über die letztere wieder auszusendenden Schaltkennzeichen dienende Informationen von der ersteren jeweils außer mit der Adresse dieser anderen teilzentralen Einrichtung oder einer ihr zugeordneten Einrichtung mit einem Zusatzkriterium zur Eingabe-/Ausgabe-Steuereinrichtung übertragen werden, welches diese veranlaßt, die betreffende Information anstatt in den Eingabeteil vielmehr in denjenigen Ausgabe-Teilspeicher einzugeben, der der teilzentralen Einrichtung zugeordnet ist, für die - bzw. deren zugeordnete Einrichtung - die betreffende Information bestimmt ist.

Die Erfindung schafft die Möglichkeit, den Informationsaustausch zwischen teilzentralen Einrichtungen in der Weise zu gestalten, daß die Probleme einer Zuteilung eines zentralen Datenbusses einerseits für Informationsübertragungsvorgänge zum und vom Zentralsteuerwerk und andererseits für Informationsübertragungsvorgänge zwischen den Teilsteuerwerken vermieden werden können. Dennoch aber wird die durch eine Informationsübertragung zwischen den teilzentralen Einrichtungen bedingte Arbeitsbelastung vom Zentralsteuerwerk ferngehalten. Die Erfindung hat ganz besondere Bedeutung für die Weitergabe von Schaltkennzeichen in Fernmeldevermittlungsanlagen. Solche Schaltkennzeichen treten in einer konventionellen Fernmeldeanlage, insbesondere Fernsprechvermittlungsanlage üblicherweise auf den einzelnen Leitungen als impulsförmig oder auch länger andauernde Gleichstromzeichen in der Weise auf, daß die einzelnen Leitungsadern (a, b ggf. c) einer solchen Leitung in verschiedenen Kombinationen bestimmte Potentiale aufweisen; dabei sind für jede Leitungsader zwei mögliche Potentialzustände vorgesehen. So werden z.B. innerhalb einer konventionellen Vermittlungsanlage Nummernwahlschaltkennzeichen in der Form über die a-Ader weitergeleitet, daß im Rhythmus der Nummernschalterimpulse Erdpotential an die a-Ader angelegt wird; das sogenannte Schlußzeichen, das in der Vermittlungsstelle erzeugt wird, wenn ein gerufener Teilnehmer bei Gesprächsende den Handapparat auflegt, erscheint in der Form 'Spannung an bAder und Erde an a-Ader'. Sind solche Schaltkennzeichen zwischen mehr oder weniger entfernt voneinander liegenden, ständig oder von Fall zu Fall miteinander verbundenen Stellen einer Fernmeldeanlage zu übertragen, so findet ggf. eine Umsetzung der Schaltkennzeichen in eine für eine solche Übertragung geeignete Darstellungsform statt. In konventionellen Fernmeldeanlagen handelt es sich bei den Übertragungskanälen, in denen solche Schaltkennzeichen übertragen werden können, im allgemeinen um räumlich voneinander getrennte Übertragungskanäle. Zunehmend sind auch Zeitmultiplex-Fernmeldeanlagen interessant geworden, d.h. Fernmeldeanlagen, bei denen die zwischen den einzelnen, ggf. von Fall zu Fall miteinander verbundenen End- oder auch Zwischenübertragungsstellen jeweils zu übertragenden Informationen Impulsfolgen aufmoduliert sind, welche zeitlich gegeneinander versetzt sind und daher durch Ineinanderschachtelung auf Zeitmultiplexleitungen zeitlich gebündelt werden können, wobei dann also die einzelnen Übertragungskanäle zeitlich voneinander getrennt sind (Zeitkanäle). Für eine PGMZeitmultiplex-Vermittlungsstelle ist durch die GB-PS 1 040 833 ein Schaltkennzeichensteuerwerk bekannt, das für die Aufnahme und die anschließende Wiedergabe solcher Schaltkennzeichen vorgesehen ist. Eine mit einer solchen Schaltkennzeichenweitergabe verbundene Steuerwerksbelastung kann aber unter Umständen relativ schnell zu einer Blockierung des Schaltkennzeichensteuerwerkes für von diesem an sich durchzuführende Verarbeitungsvorgänge mit sich bringen, so daß solche Steuerwerke an der Erfüllung ihrer eigentlichen Aufgabe, für die betreffende Vermittlungsstelle bestimmte Schaltkennzeichen aufzunehmen und selbst zu verarbeiten, bzw. von der Vermittlungsstelle äusgehende Schaltkennzeichen zu erzeugen und abzusetzen, hinsichtlich eines Teiles ihrer Arbeitskapazität entzogen sind. Sie können also dieser ihrer eigentlichen Aufgabe nicht un beeinflußt von über die betreffende Vermittlungsstelle nur zu übertragenden Schaltkennzeichen genügen, sondern unterliegen einer zusätzlichen Belastung durch die Schaltkennzeichenweitergabe. In Zeitmultiplex-Fernsprechvermittlungsanlagen (wie sie z.B. in der Zeitschrift 'Tel Com. Keport', 4. Jahrgang/I98I / Beiheft, beschrieben ist) ist es üblich, die den Zeitkanälen jeder der Zeitmultiplexleitungen zugeordneten, der Signalisierung von Schaltkennzeichen dienenden Signalisierungsteilinformationen mit Hilfe einer dezentralen Steuereinrichtung einer Anschlußgruppe (LTG) aufzunehmen (gleiches gilt für AnalogVerbindungsleitungen und für Analog-Teilnehmerleitungen) und einem zentralen Steuerwerk zuzuleiten. Dieses verarbeitet die Signalisierungsteilinformationen und führt sie gezielt den dezentralen Steuereinrichtungen von denjenigen Anschlußgruppen zu, über die die Verbindungen weitervermittelt wurden, die über die der genannten Zeitmultiplexleitung angehörenden Zeitkanäle verlaufen. Für diese technischen Zusammenhänge hat die vorliegende Erfindung besondere Bedeutung und schafft die Möglichkeit die der bloßen Weiterleitung von Schaltkennzeichen dienenden Daten die jeweils von der dezentralen Steuereinrichtung einer Anschlußgruppe einer dezentralen Steuereinrichtung einer anderen Anschlußgruppe weiterzuleiten sind, vom Zentralsteuerwerk fernzuhalten.

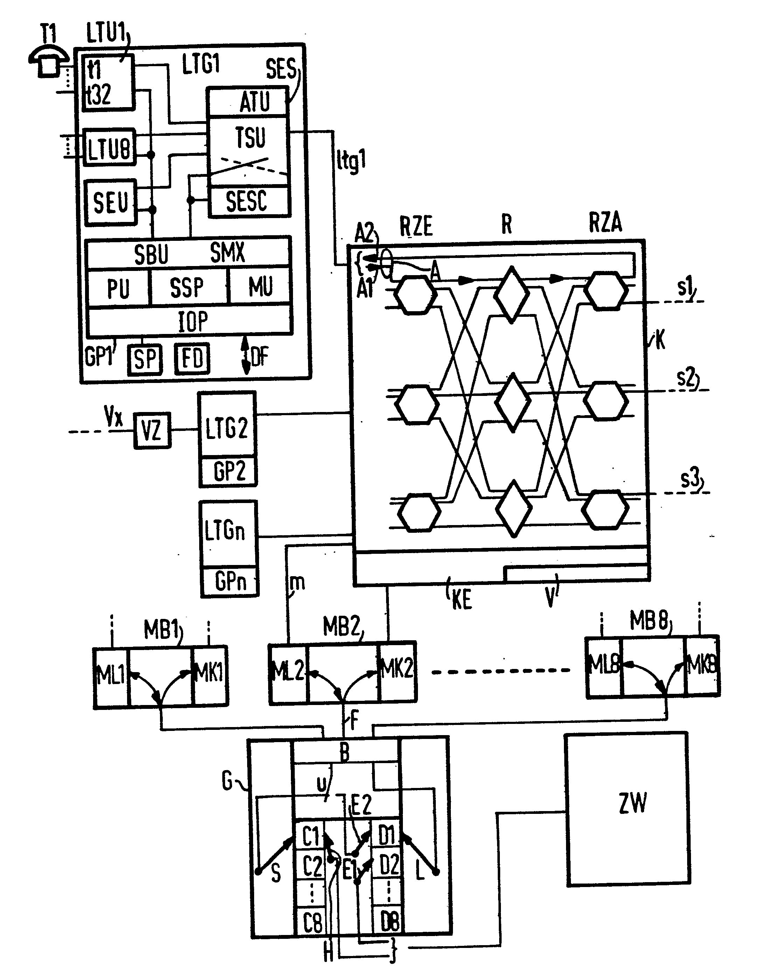

In der Zeichnung ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäß arbeitenden PCM-Fernsprechvermittlungsanlage ein. Erst weiter unten werden die erfindungsgemäßen Besonderheiten dieser Vermittlungsanlage erläutert.

Ein in drei Koppelstufen RZE, R und RZA aufgebautes Koppelfeld weist eingangsseitig eine größere Anzahl von Koppelfeldanschlüssen auf, von denen einer dargestellt und mit A bezeichnet ist. Das Koppelfeld besteht aus mehreren Koppelfeldteilen. Von ihnen ist nur der Koppelfeldteil K gezeigt. Sie stehen über geitmultiplexzwischenleitungen in ähnlicher Weise miteinander in Verbindung, wie es die DE-PS 20 55 745 oder die DE-PS 18 12 191 zeigt. Jeder der Koppelfeldanschlüsse umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung Al und eine Zeitmultiplexleitung A2. Für jede dieser beiden Zeitmultiplexleitungen ist die jeweilige Signalübertragungsrichtung durch entsprechende Pfeile angedeutet.

Die Koppelvielfache der ersten Koppelstufe KZE sind kombinierte Zeitlagen-Raumlagen-Vielfache, wie die dargestellten Symbole erkennen lassen. Die Koppelvielfache der mittleren Koppelstufe R sind Kaumlagenvielfache. Die Koppelvielfache der letzten Koppelstufe RZA sind wieder Raumlagen-Zeitlagen-

Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, z.B. A des Koppelfeldteiles K, sind über für jeweils beide Nachrichtenübertragüngsrichtungen ausgelegte Zeitmultiplexleitungen, z.B. die Zeitmultiplexleitung ltgl, Anschlußgruppen, z.B. die Anschlußgruppe LTG1 (Line Trunk Group), einzeln angeschlossen. Eine solche Anschlußgruppe ist eingangsseitig mit Teilnehmerleitungen (analog), Analog-Verbindungsleitungen und mit PCM-Verbindungsleitungen (alternativ sowie auch in Kombination) beschaltbar. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktionen erforderlichen Einrichtungen enthalten (vgl. NTZ Bd. 33/1980, Heft 10, Seiten 646 bis 652 und 1978 International Zurich Seminar on Digital Communications; Proccedings IEEE Catalogue, Nr. 78 CH 1325-0 ASST, Seiten B2-1, A4.1; DE-OS 31 00 811 DE-OS 31 04 002 und DE-OS 31 06 903

In der Zeichnung ist unter anderem die Anschlußgruppe ITG1 gezeigt. Deren Aufbau und Arbeitsweise sind ausführlich in der DE-OS 28 26 113 ab Seite 6 unten beschrieben. Die weiteren Erläuterungen setzen diese Beschreibung aus bekannt voraus und beschränken sich auf die im vorliegenden Falle besonders wesentlichen Zusammenhänge.

Ein zentrales Steuerwerk ZW dient unter anderem zur Herstellung der über das Koppelfeld aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden. Verbindung über das Koppelfeld an, also die von der Verbindung durchlaufenen Koppelvielfache und Zwischenleitungen, sowie die darin jeweils belegten Kanäle. Diese Vermittlungsdaten werden mit Hilfe des Zentralsteuerwerkes, das also unter anderem auch die Funktion einer Wegesucheinrichtung nebst Belegungsspeicher ausübt, erarbeitet und zu Koppelfeldeinstelleinrichtungen KE der Koppelfeldteile, z.B. K, übertragen. Der die Vermittlungsdaten übertragende Datenfluß vom Zentralsteuerwerk ZW zu den Koppelfeldeinstelleinrichtungen verläuft über mit dem Zentralsteuerwerk über Datenleitungen, z.B. F, verbundene Puffereinrichtungen MB1, MB2, ... MB8, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist z.B. in der DE-PS 15 37 849 ausführlich beschrieben.

Außer dem zentralen Steuerwerk ZW ist eine größere Anzahl von dezentralen Steuereinrichtungen GP1 bis GPn dargestellt, die jeweils den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber können der bereits angegebenen DE-OS 28 26 113 entnommen werden.

Die dezentralen Steuereinrichtungen GP1 bis GPn stehen mit dem zentralen Steuerwerk ZW über Datenkanäle in Verbindung, die einzeln pro dezentrale Steuereinrichtung über das Koppelfeld (K) bis zur Puffereinrichtung MB2 durchgeschaltet sind. Von dieser Puffereinrichtung, und zwar von ihrem Datenkopf ML2, führt also je ein eigener Datenkanal zu jeder der dezentralen Steuereinrichtungen. Hierzu ist die Puffereinrichtung MB2 mit ihrem Datenkopf ML2 über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlußgruppen LTG1 bis LTGn. Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfaßt. Die Zeitmultiplexeinrichtung m ist also an einen Koppelfeldanschluß wie den mit A bezeichneten angeschaltet.

Jede Datenverbindung zwischen dem Datenkopf einer Puffereinrichtung und einer jeden der Anschlußgruppen, z.B. der Anschlußgruppe LTG1, umfaßt einen Kanal zur Übertragung von Daten von der Puffereinrichtung zur betreffenden Anschlußgruppe und einen weiteren Kanal zur Übertragung von Daten in der umgekehrten Kichtung. Diese beiden Datenkanäle führen zu und von der der betreffenden Anschlußgruppe individuell zugeordneten dezentralen Steuereinrichtung.

Die Herstellung und die Aufrechterhaltung der erläuterten Datenverbindungen über das Koppelfeld erfolgt mit Hilfe der Koppelfeldeinstelleinrichtungen in der gleichen Weise wie die Herstellung und die Aufrechterhaltung von Nachrichtenverbindungen, z.B. Fernsprechverbindungen. Hierzu sind in an sich bekannter Weise den Koppelvielfachen des Koppelfeldes Haltespeicher zugeordnet, in die die jeweils ein Koppelvielfach betreffenden Vermittlungsdaten eingespeichert werden. Mit Hilfe dieser Haltespeicher wird bewerkstelligt, daß in den jeweiligen Zeitlagen. die erforderlichen Durchschaltungen zur Verfügung stehen bzw. die erforderlichen Schreibvorgänge der Zeitlagenvielfache stattfinden. Alle weiteren Einzelheiten, die Aufbau und Arbeitsweise einer Zeitmultiplexkoppelanordnung betreffen, werden hier als bekännt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtungen zu den Koppelfeldeinstelleinrichtungen übertragen. Hierzu dient unter anderem ein Datenkopf, z.B. MK2, der der jeweiligen Puffereinrichtung, z.B. MB2, zugeordnet ist. Der Vollständigkeit halber sei an dieser Stelle hinzugefügt, daß mit einer Puffereinrichtung auch eine Mehrzahl von Koppelfeldeinstelleinrichtungen verbunden sein kann. Diese mehreren Koppelfeldeinstelleinrichtungen können einzeln mehreren Koppelfeldteilen eines größeren Koppelfeldes zugeordnet sein. Es ist auch möglich, je eine Koppelfeldeinstelleinrichtung pro Koppelstufe vorzusehen.

Da die weiter oben beschriebenen Datenverbindungen zwischen der Puffereinrichtung über die betreffende Zeitmultiplexleitung (m) zu jeder der Anschlußgruppen LTG1 bis LTGn mit Hilfe des Koppelfeldes (K) durchgeschaltet sein müssen, bevor der Aufbau von Nachrichtenverbindun gen, z.B. Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, daß jede der Koppelfeldeinstelleinrichtungen, z.B. KE, außerdem in einem ihr zugeordneten Speicher, z.B. V, Einstelldaten, d.h. also die Vermittlungsdaten, für die Datenkanäle gespeichert enthält. Diese Vermittlungsdaten brauchen also bei einem Neuaufbau der Datenverbindungen nicht jeweils vom zentralen Steuerwerk ZW neu erarbeitet zu werden und nicht über die Puffereinrichtungen erneut übertragen zu werden. Sind die zwischen jeder der Puffereinrichtungen und den Anschlußgruppen, z.B. LTG1 bis LTGn, erforderlichen Datenverbindungen über das Koppelfeld K neu herzustellen, so gibt das zentrale Steuerwerk ZW lediglich einen entsprechenden Befehl an die Puffereinrichtungen ab, den diese an die Koppelfeldeinstelleinrichtungen weitergeben und aufgrund deren diese die in ihrem jeweiligen Speicher V gespeicherten Vermittlungsdaten entnimmt, um in an sich bekannter Weise die erforderlichen Vermittlungsvorgänge zur Herstellung der einzelnen Datenverbindungen einzeln nacheinander auszuführen.

Wie in der bereits genannten DE-OS 28 26 113 erläutert ist, werden über den Zeitkanalkoppler TSU der Änschlußgruppe LTGl außer Nachrichtenverbindungen von und zu Teilnehmerstellen sowie Verbindungsleitungen auch die bereits erwähnten Datenverbindungen zwischen den den Anschlußgruppen, z.B. LTGl, zugeordneten dezentralen Steuereinrichtungen, z.B. GP, einerseits und dem zentralen Steuerwerk ZW andererseits hergestellt. Diese Datenverbindungen verlaufen, wie bereits dargelegt, weiterhin über das Koppelfeld und die Zeitmultiplexleitung m.

Wie bereits erwähnt, sind an die Anschlußgruppen außer Teilnehmerleitungen auch Verbindungsleitungen (AnalogVerbindungsleitungen und/oder Zeitmultiplex-Verbindungsleitungen) angeschlossen. Die Anschlußgruppen LTG2 und weitere, bis LTGn, sind in der gleichen Weise ausgebildet wie die Anschlußgruppe LTG1.

Die dezentralen Steuereinrichtungen GP wirken bei der Aufnahme und Abgabe von Schaltkennzeichen bezüglich der angeschlossenen Teilnehmerleitungen und Verbindungsleitungen mit. Diesen Schaltkennzeichen entsprechende Informationen werden bei über eine Teilnehmerleitung und/oder Verbindungsleitung aufzunehmenden Schaltkennzeichen gebildet und zum zentralen Steuerwerk übertragen. Für über Teilnehmerleitungen und/oder Verbindungsleitungen auszusendende Schaltkennzeichen liefert das Zentralsteuerwerk entsprechende Daten zu der betreffenden dezentralen Steuereinrichtung, welche dann die Bildung und Aussendung des betreffenden Schaltkennzeichens bewerkstelligt.

An die Anschlußgruppe LTG2 ist unter anderem eine Verbindungsleitung Vx über eine Leitungsabschlußschaltung Vz angeschlossen. Hierbei handelt es sich um eine AnalogVerbindungsleitung. Sie führt zu einer Fernsprechvermittlungsanlage konventioneller Bauart. Wie oben erläutert, werden in konventionellen Fernsprechvermittlungsanlagen Schaltkennzeichen in Form von Gleichstromimpulsen (auch Wechselstromimpulsen) übertragen. Hierbei kann es sich um das Beginnzeichen, das Schlußzeichen, um Gebührenzählimpulse, um das Wahlendekennzeichen und dergleichen handeln. In den Büchern 'Landesfernwahl' und 'Landesfernwahl II' von R. Führer (Verlag R. Oldenbourg, München) sind Aufbau und Arbeitsweise von konventionellen Fernsprechvermittlungsstellen in großer Ausführlichkeit beschrieben, ebenfalls Einrichtungen zur Aussendung von über Analog-Verbindungsleitungen weiterzugebenden Schaltkennzeichen, insbesondere von Gebührenzählimpulsen, die als Gleichstromsignale und/oder über zugleich mit den Nachrichtenwegen, z.B. Sprechstromkreisen und ebenso wie diese für eine Verbindung durchgeschaltete Strompfade übertragen werden (Vierdraht-EMD-Technik). Wird eine Verbindung von der in der Zeichnung dargestellten Fernsprechvermittlungsstelle über deren Koppelfeld und die Analog-Verbindungsleitung Vx zu einem an eine konventionelle Fernsprechvermittlungsanlage angeschlossenen Teilnehmer hergestellt, so sind Schaltkennzeichen, die rückwärts über die Analog-Verbindungsleitung Vx übertragen werden und in der Leitungsabschlußschaltung Vz eintreffen, letztlich der dezentralen Steuereinrichtung GP der Anschlußgruppe LTG1 zuzuleiten; das ist also die dezentrale Steuereinrichtung derjenigen Anschlußgruppe, welche die mit dieser Analog-Verbindungsleitung über das Koppelfeld K verbundene Teilnehmerleitung im betrachteten Verbindungsfall zugeordnet ist.

Bei Herstellung solcher Verbindungen von einer Teilnehmerleitung (z.B. der der Teilnehmerstelle Tl zugeordneten Teilnehmerleitung) über das Koppelfeld und eine Analog-Verbindungsleitung, z.B. Vx, sowie eine dieser zugeordnete verbindungsindividuelle Schalteinrichtung, z.B. Vz, ist vorgesehen, daß die erforderliche Weiterleitung der Schaltkennzeichen, die z.B. über die Verbindungsleitung Vx in der verbindungsindividuellen Schalteinrichtung Vz eintreffen und der betreffenden dezentralen Steuereinrichtung, z.B. GP1, zuzuführen sind, mit Hilfe der Puffereinrichtungen MB1 bis MB8 bewerkstelligt wird. Ferner ist das Zentralsteuerwerk mit einer Eingabe-/Ausgabe-Einrichtung G ausgestattet, die dem gleichen Zweck dient, wie die in der bereits genannten DE-PS 20 55 745 erläuterte und hier als 'Sammelspeicher' bezeichnete Eingabe-/Ausgabe-Einrichtung. Diese

5

Einrichtung hat also die Aufgabe, Informationen, die von den dezentralen Steuereinrichtungen kommend zur Übertragung an das Zentralsteuerwerk bestimmt sind, aufzunehmen und an das Zentralsteuerwerk ZW weiterzuleiten. Ferner hat die Eingabe-/Ausgabe-Einrichtung G die Aufgabe, Informationen, die vom Zentralsteuerwerk ZW erarbeitet werden, über die Puffereinrichtungen MB1 bis MB8 an die dezentralen Steuereinrichtungen weiterzuleiten, d.h. zu verteilen. Darüber hinaus hat die Eingabe-/AusgabeEinrichtung im Sinne der Erfindung die Aufgabe, Informationen, die von einer dezentralen Steuereinrichtung stammen und für eine andere dezentrale Steuereinrichtung bestimmt sind, unter Umgehung des Zentralsteuerwerks weiterzuleiten.

Die Eingabe-/Ausgabe-Einrichtung G weist einen Eingabeteil auf, der aus den Eingabe-Teilspeichern C1 bis C8 besteht, die den Puffereinrichtungen MB1 bis MB8 individuell zugeordnet sind. Es ist auch möglich, auf eine Unterteilung des Eingabeteiles in mehrere Eingabe-Teilspeicher zu verzichten.

Von den dezentralen Steuereinrichtungen über die Puffereinrichtungen MB1 bis MB8 eintreffende und zur Weiterleitung an das Zentralsteuerwerk ZW bestimmte Informationen gelangen zunächst in eine Sende- und Empfangseinrichtung B der Eingabe-/Ausgabe-Einrichtung G. Diese Informationen enthalten unter anderem jeweils die Adresse der dezentralen Steuereinrichtung, von der sie herkommen. Über die Ruheseite der Umschalteeinrichtung u gelangen sie zu einer Schreibeinrichtung S, die sie sukzessive nacheinander in den Eingabeteil des Eingabe-/Ausgabespeichers (C1 bis C8) der Eingabe-/Ausgabeeinrichtung G einspeichert. Mit Hilfe einer Leseeinrichtung H vermag das Zentralsteuerwerk ZW auf nicht im einzelnen beschriebene und an sich bekannte Weise die Informationen aus dem Eingabeteil (C1 bis C8) des Eingabe-/Ausgabe-Speichers der Eingabe-/Ausgabe-Einrichtung G abzurufen. Das Zentralsteuerwerk nimmt also sukzessive nacheinander die im Eingabeteil gespeicherten Informationen auf und verarbeitet sie in bekannter Weise.

Vom Zentralsteuerwerk ZW erarbeitete und für die dezentralen Steuereinrichtungen GP der Anschlußgruppen LTG bestimmte Informationen werden vom Zentralsteuerwerk ZW mit Hilfe der Schreibeinrichtung EI in den Ausgabeteil des Eingabe-/Ausgabe-Speichers der Eingabe-/Ausgabe-Einrichtung G eingeschrieben. Diese Informationen enthalten unter anderem die Adresse der jeweiligen dezentralen Steuereinrichtung, für die sie bestimmt sind. Da die dezentralen Steuereinrichtungen bestimmten Puffereinrichtungen (MB1 bis MB8) fest zugeordnet sind, vermag die Eingabe-/Ausgabe-Einrichtung G anhand der jeweiligen Adresse der betreffenden dezentralen Steuereinrichtung zu erkennen, über welche der Puffereinrichtungen MB1 bis MB8 eine Information zu leiten ist. Demgemäß schreibt die Schreibeinrichtung EI die betreffende Information in denjenigen der Ausgabe-Teilspeicher D1 bis D8 ein, welcher der betreffenden Puffereinrichtung, z.B. MB2, fest zugeordnet ist. In den Ausgabe-Teilspeicher D2 werden also immer nur solche Informationen eingeschrieben, die für dezentrale Steuereinrichtungen bestimmt sind, die der Puffereinrichtung MB2 zugeordnet sind.

Mit Hilfe einer Leseeinrichtung L ruft die Eingabe-/Ausgabe-Einrichtung G die Informationen aus den AusgabeTeilspeichern D1 bis D8 ab und bringt sie über die Empfangs- und Sendeeinrichtung B zur Aussendung. Hierbei ist die der jeweiligen Information beigegebene Adresse der betreffenden dezentralen Steuereinrichtung maßgebend dafür, über welche der Puffereinrichtungen MB1 bis MB8 eine Information zur Aussendung kommt. Es besteht auch die Möglichkeit, jedem einzelnen der Ausgabe-Teilspeicher D1 bis D8 je eine eigene Leseeinrichtung (L) zuzuordnen. Dadurch kann es ermöglicht werden, daß Vorgänge der Informationsaussendung über die verschiedenen Puffereinrichtungen MB1 bis MB8 gleichzeitig abgewickelt werden. In diesem Falle müßte also auch die Empfangsund Sendeeinrichtung B entsprechend mehrteilig sein.

Die zu den Puffereinrichtungen MB1 bis MB8 ausgesendeten Informationen werden hier in der bereits beschriebenen Weise zu den dezentralen Steuereinrichtungen weitergeleitet, oder auch zur betreffenden Koppelfeldeinstelleinrichtung (KE).

Handelt es sich bei einer Information, die von einer dezentralen Steuereinrichtung über die ihr zugeordnete Puffereinrichtung abgegeben wird, um eine Information zur Weiterleitung von Schaltkennzeichen (diese Zusammenhänge wurden weiter oben ausführlich erläutert), also um eine Information, die lediglich zu einer anderen dezentralen Steuereinrichtung hin zu übertragen ist, die also nicht zur Weiterverarbeitung durch das Zentralsteuerwerk ZW bestimmt ist, so ist dieser Information außer der Adresse derjenigen dezentralen Steuereinrichtung, für die sie bestimmt ist, ein Zusatzkriterium beigefügt. Diese Information gelangt nun zur Eingabe-/Ausgabe-Einrichtung G. Diese erkennt anhand des Zusatzkriteriums mit Hilfe ihrer Empfangs- und Sendeeinrichtung B, daß es sich um eine Information handelt, die nicht zum Zentralsteuerwerk weiterzugeben ist, sondern zu einer anderen dezentralen Steuereinrichtung. Aufgrund des Zusatzkriteriums wird in der Eingabe-/Ausgabe-Einrichtung G die Umschalteeinrichtung u betätigt, wodurch die Empfangs- und Sendeeinrichtung B anstatt mit der Schreibeinrichtung S vielmehr mit der Schreibeinrichtung E2 verbunden wird. Die betreffende Information gelangt nun zu dieser Schreibeinrichtung, die anhand der der Information beigegebenen Adresse derjenigen dezentralen Steuereinrichtung, für die die Information bestimmt ist, erkennt, welcher der Puffereinrichtungen MB1 bis MB8 die dezentrale Steuereinrichtung zugeordnet ist, welche die Information erhalten soll. Anhand dieser Adresse schreibt die Schreibeinrichtung E2 diese Information in denjenigen Ausgabe-Teilspeicher, z.B. D2, ein, der der Puffereinrichtung, z.B. MB2, zugeordnet ist, welcher die dezentrale Steuereinrichtung entspricht, die die betreffende Information erhalten soll. Das Zusatzkriteriumveranlaßt also die Eingabe-/Ausgabe-Einrichtung G, die betreffende Information anstatt in den Eingabeteil des Eingabe-/Ausgabe-Speichers der Eingabe-/Ausgabe-Einrichtung G vielmehr in denjenigen Ausgabe-Teilspeicher einzugeben, der der Puffereinrichtung zugeordnet ist, über die die betreffende Information zu leiten ist.

**Patentansprüche**

1. Schaltungsenordnung für Fernmeldevermittlungsanlagen, insbesondere Zeitmultiplex-Fernsprechvermittlungsanlagen, mit jeweils einem zentralsteuerwerk (ZW) und mit teilzentralen Einrichtungen (MB1 - MB8), die Informationen einerseits zum Zentralsteuerwerk (ZW) geben sowie von ihm empfangen, und die mit dem Zentralsteuerwerk (ZW) über ihnen individuelle Leitungen oder ihnen individuelle Kanäle einer Zeitmultiplexleitung (m) verbunden sind, und in denen für den Informationsaustausch des Zentralsteuerwerks (ZW) mit den teilzentralen Einrichtungen (MB1 - MB8) sowie für den Informationsaustausch zwischen den teilzentralen Einrichtungen (MB1 - MB8) ein Eingebe-/Ausgabe-Speicher (G) vorgesehen ist, der außer einem Eingebeteil (C1 - C8, H) für durch das Zentralsteuerwerk (ZW) abzurufende und von ihm zu vererbeitende Informationen einen in Ausgebeteilspeicher (D1, D2, ... D8) unterteilten Ausgebeteil (01 - D8, L) enthält, und der zur Zwischenspeicherung für vom Zentralsteuerwerk (ZW) erarbeitete und zu den teilzentralen Einrichtungen (MB1 - MB8) zu verteilende Informationen, sowie für von einer der teilzentralen Einrichtungen (z.B. MB2) abzugebende und jeweils für eine andere teilzentrale Einrichtung (z.B.MB1) bestimmte Informationen dient, die von der ersteren jeweils mit der Adresse dieser anderen teilzentralen Einrichtung oder einer ihr zugeordneten Einzichtung (zum Beispiel GP1 in LTG1) zu einer Eingebe-Ausgabe-Steuereinrichtung (B, S, L, H, E1, E2) des Eingebe-Ausgabe-Speichers (G) übertragen werden, dadurch gekennzeichnet, daß die Ausgebeteilspeicher (D1, D2, ... D8) den teilzentralen Einrichtungen (MB1, MB2, ... MB8) zugeordnet sind, und daß von einer der teilzentrelen Einrichtungen abzugebende (z.B. MB2) und unverändert jeweils für eine andere teilzentrale Einrichtung (z.B. MB1) bestimmte und einer Signalisierung von verbindungsindividuellen, in der ersteren eingetroffenen und über die letztere wieder auszusendenden Scheltkennzeichen dienende Informationen von der ersteren jeweils außer mit der Adresse dieser anderen teilzentralen Einrichtung oder einer ihr zugeordneten Einrichtung (z.B. GP1 in LTG1) mit einem Zusetzkriterium zur Eingabe-/Ausgabe-Steuereinrichtung (B, S, L, H, E1, E2) übertragen werden, welches diese veranlaßt, die betraffende Information anstatt in den Eingabeteil (C1 - C8) vielmehr in denjenigen Ausgabe-Teilspeicher (z.B. D1) einzugeben, der der teilzentralen Einrichtung (z.B. MB1) zugeordnet ist, für die - bzw. deren zugeordnete Einrichtung (z.B. GP1 in LTG1) - die betreffende Information bestimmt ist.

2. Schaltungsanordnung nach Anspruch 1 dadurch gekennzeichnet, daß die teilzentralen Einrichtungen Pufferspeicher sind, an die eine Mehrzahl von dezentralen Steuereinrichtungen angeschloasen sind.

3. Schaltungsanordnung nach Anspruch 2, dadurch gekennzeichnet, daß die zu den dezentralen Einrichtungen zu übertragenden Informationen mit Adressen veraehen aind, die Adreaaen der dezentralen Steuereinrichtungen sind; und daß aus diesen Adressen jeweils auch die Adresse der teilzentralen Einrichtung resultiert, zu der jeweila eine dezentrale Steuereinrichtung gehört.

**Claims**

1. A circuit arrangement for telecommunications exchanges, in Particular t.d.m. telephone exchanges, which respectively have a central control unit (ZW) and sub-central devices (MB1 - MB8), which on the one hand transmit information to the central control unit (ZW) and also receive it therefrom, and which are connected to the central control unit (ZW) by means of lines, which are individual thereto, or channels, which are individual thereto, of a t.d.m. line (m), and in which for the exchange of information of the central control unit (ZW) with the sub-central devices (MBI - MB8) and for the exchange of information between the sub-central devices (MBIMB8), there is provided an input/output store (G) which in addition to an input section (C1 - C8,H) for information which is to be called up by the central control unit (ZW) and to be processed thereby, comprises an output section (D1 - D8) divided into output section stores (D1, D2, ...D8), and which serves to store inter,mediately information which is processed by the central control unit (ZW) and is to be distributed to the sub-central devices (MB1 - MB8) and also information which is to be transmitted byone of the sub-central devices (e.g. MB2) and which is respectively destined for another sub-central device (e.g. MB1), which information is transmitted from the first sub-central device together with the address of the other sub-central device or a device (e.g. CP1 in LTG1), which is assigned thereto, to an input-output control device (B, S, L, H, E1, E2) of the input-output store (G), characterised in that the output section stores (D1,D2, ... D8) are assigned the sub-central devices (MB1, MB2, ...MB8), and the information which is to be transmitted from one of the sub-central devices (e.g. MB2) and as before respectively destined for another sub-central device (e.g. MB1) and which serves for a signalling of connection-individual switching signals which are received in the first sub-central device and are to be re-transmitted by means of the latter, is transmitted from the first sub-central device not only with the address of the other sub-central device or a device (e.g. GP1 in LTG1) assigned thereto but also with an additional criterion to the input/output control device (B, S, L, H, E1, E2) which additional criterion causes the latter to read the respective information into that output section store (e.g. D1), instead of the input section (C1 - C8), which is assigned to the subcentral device (e.g. MB1), for which - or whose assigned device (e.g. GP1 in LTG1) - the respective information is destined.

2. A circuit arrangement as claimed in claim 1, characterised in that the sub-central devices are buffer stores, to which a plurality of decentral control devices are connected.

3. A circuit arrangement as claimed in claim 2, characterised in that the information is to be transmitted to the decentral devices is provided with addresses which are addresses of the decentral control devices, and that the address of the subcentral device, to which a decentral control device is respectively assigned, respectively results from these adresses.

## Revendications

1. Nontage pour des centraux de télécommunications, en particulier pour des centraux de télécommunications à multiplexage temporel avec respectivement une unité de commande centrale (ZW) et avec des dispositifs (NB1-NB8) dépendant partiellement de l'unité centrale, qui transmettent d'une part des informations à l'unite centrale de commande (ZW)eten reçoivent de celle-ci, et qui sont reliées à l'unité centrale de commande (ZW) par l'intermédiaire de lignes qui leurs sont individuelles ou par l'intermédiaire de canaux d'une ligne à multiplexage temporel (m), qui leur sont individuels, et dans lesquels il est prévu, pour l'échange d'informations de l'unité centrale de commande (ZW) avec les dispositifs qui dépendent partiellement de l'unitg centrale (MB1-MB8) ainsi que pour l'échange d'informations entre les dispositifs qui dépendent partiellement de l'unité centrale (MB1-MB8), une mémoire d'entrée/sortie (C) qui comporte, en plus d'une partie entrée (CI-C8, H) pour des informations à appeler sélectivement par l'unité de commande centrale (ZW) et acceptées par elle, une partie sortie (D1-D8, L) subdivisee en mémoires partielles de sortie (D1, D2, ... D8) et qui sert à la mémorisation temporaire pour des informations élaborées par l'unite de commande centrale (ZW) et à distribuer aux dispositifs qui dépendent partiellement de l'unité centrale (MBI-MB8), ainsi que pour des informations à émettre par l'un des dispositifs qui dépendent partiellement de l'unité centrale (par exemple MB2) et destinées à un autre dispositif qui dépend partiellement de l'unité centrale (par exemple MBI), qui sont transmises du premier dispositif avec l'adresse dudit autre dispositif qui dépend partiellement de l'unité centrale ou d'un dispositif (par exemple GPI dans LTGI) qui lui est associé, à un dispositif de commande d'entrée/sortie (B, S, L, H, E1, E2) de la mémoire d'entrée/sortie (G), caractérisé par le fait que les mémoires partielles de sortie (D1, D2, ... D8) sont associées aux dispositifs qui dépendent partiellement de l'unité centrale (MB1, MB2, ... MB8), et que des informations qui sont à émettre par l'un des dispositifs qui dépendent partiellement de l'unité centrale (par exemple MB2), qui sont destinées, sans modification, à un autre des dispositifs qui dépendent partiellement de l'unité centrale (par exemple MB1) et qui servent à une signalisation de caractéristiques de commutation qui sont individuelles pour des liaisons et qui arrivent dans le premier et qui sont à nouveau à transmettre par le dernier, sont transmises du premier dispositif partiellement dépendant de l'unité centrale, à l'exception de celui avec l'adresse de cet autre dispositif qui dépend partiellement de l'unité centrale, ou d'un dispositif qui lui est associé (par exemple GP1 dans LTG1), et avec un critere supplémentaire, aux dispositifs de commande d'entrée/sortie (B, S, L, H, E1, E2), lequel critere supplémentaire fait que l'information concernée est inscrite, non point dans la partie entrée (C1C8) mais plutôt dans celle des mémoires partielles de sortie (par exemple D1) qui est associée au dispositif qui dépend partiellement de l'unité centrale (par exemple MBI) auquel, ou au dispositif associé (par exemple GPI dans LTGI), l'information concernée est destinée.

2. Montage selon la revendication 1, caractérisé par le fait que les dispositifs qui dépendent partiellement de l'unité centrale sont des mémoirestampons auxquelles sont reliés plusieurs dispositifs de commande indépendants du dispositif de commande central.

3. Montage selon la revendication 2, caractérisé par le fait que les informations qui sont à transmettre au dispositif indépendant de l'unité centrale, sont pourvues d'adresses qui sont des adresses des unités de commande indépendantes de l'unité centrale, et qu'à partir de ces adresses résulte également l'adresse du-dispositif qui dépend partiellement de l'unité centrale de commande, auquel appartient respectivement un dispositif de commande indépendant de l'unité de commande centrale.